# EUROPEAN PATENT SPECIFICATION

(11) **EP 4 310 394 B1**
(45) Date of publication and mention of the grant of the patent: **21.05.2025**
(21) Application number: 22020352.5
(22) Date of filing: 21.07.2022
(51) Int. Cl.: F23C 1/08, F23C 5/02, F23D 1/00, F23D 14/24, F23D 14/78, F23D 17/00, F23D 99/00

(54) **BURNER ARRANGEMENT FOR SYNTHESIS GAS PRODUCTION**
BRENNERANORDNUNG FÜR DIE SYNTHESEGASERZEUGUNG
AGENCEMENT DE BRÛLEUR POUR LA PRODUCTION DE GAZ DE SYNTHÈSE

(43) Date of publication of application: 24.01.2024
(73) Proprietor: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventor: Ulber, Dieter, D-60439 Frankfurt am Main (DE); Weigand, Peter, D-60439 Frankfurt am Main (DE); Schlichting, Holger, D-60388 Frankfurt am Main (DE); Walter, Stefan, D-60439 Frankfurt am Main (DE)
(74) Representative: Air Liquide

(56) References cited:
- EP-A1- 2 006 357
- US-A- 5 338 489
- US-A1- 2003 056 439
- US-A1- 2021 215 334
- US-A1- 2022 127 141

## Description

### TECHNICAL FIELD

The present disclosure relates generally to a burner for synthesis gas production by partial oxidation of carbon-containing fuels; more specifically, the present disclosure relates to a burner arrangement comprising of one or more media cooled co-annular feed channels for carbon-containing fuels, oxidant, and moderator, which are embedded in a refractory lining of the POX (partial oxidation) reactor characterized by water cooling that is distant to the high-temperature synthesis gas atmosphere inside the POX reactor.

### BACKGROUND

Typically, a synthesis gas comprising components like hydrogen and carbon monoxide, is produced in a reactor comprising of a burner, and a reaction chamber in which a mixture of reactants, such as natural gas and oxygen, is transformed into the synthesis gas. In general, burners are installed at the head of the reactor such that their flame is vertically guided into the reactor from top to bottom so that the lower end of the burner is exposed to high temperatures and the corrosive atmosphere of a combustion chamber. EP1200338B1 describes a burner with integrated water cooling of an injection device front plate. EP0127273B1 and EP0315225B1 describe injection devices with co-annular injection pipes. EP1016705B1 describes a co-annular injection device with internal steam atomization. EP2603451 describes an injection device with a protective layer on the front plate. EP0640679A1 describes a synthesis gas burner that uses a porous ceramic or porous metal plate or cup to shield and cool the downstream end of the burner from the hot hostile environment within a gas generator. US5273212A describes a synthesis gas burner where the downstream face of the cooling chamber is clad with a layer composed of individual, adjacently arranged, ceramic platelets. There is also prior art available describing a co-annular injection device that is surrounded by a cooling flange. The purpose of the cooling flange however is to avoid stress and leakage of synthesis gas via the flange connection. US 5 338 489 A discloses a burner arrangement for syngas production having the features specified in the preamble of claim 1.

The prior art describes an injection device with several co-annular injection lances, which are embedded in a water-cooled metal front plate. However, the water-cooled metal front plate may be under severe mechanical stress which is caused by the temperature difference between the high-temperature synthesis gas atmosphere in a POX (partial oxidation) reactor with heat flux from radiation and convection in a range of 0.5 to 3.0 megawatt (MW)/ square meter (m²) and between a cooling water flow rate with heat transfer coefficients of approx.1 - 50 kilowatt (kW)/ square meter Kelvin (m²K). This mechanical stress from the high temperature gradient, the high-temperature synthesis gas atmosphere close to the metal front plate, and the corrosive components in the synthesis gas may result in the operating lifetimes of the injection device being less than the turnaround period of the POX reactor.

On the other hand, other prior art described above with media cooled co-annular injection lances have short operating lifetimes because of the high temperature of the metal lances during shut-down of the reactor because the cooling flow of the feed and oxidizer has to be interrupted. Other media for cooling during shut-down of the reactor, such as high-pressure nitrogen or steam, which are injected into the feed, oxidizer, and/or steam annulus, are not always available.

The co-annular injection device which is surrounded by the cooling flange does not prevent high temperature and related damage/change of the material properties of the co-annular lances themselves, as only the flange connection of the device is cooled. Synthesis gas break-through through either the oxidizer or feed injection lances cannot be safely prevented.

Therefore, there is a need to address the aforementioned technical drawbacks in existing technologies in burners in order to improve the operational efficiency for synthesis gas production.

### SUMMARY

The present invention seeks to provide a burner arrangement for feeding hydrocarbon feedstock into a reactor for partial oxidation (POX) of gaseous feed (Gas-POX) or liquid feed such as preheated oil residue (Residue-POX / Gasification), for autothermal reforming or for gasification of coal or coke (Coal / Coke Gasification). The present invention aims to provide a solution that overcomes, at least partially, the problems encountered in the prior art and provide an improved burner arrangement comprising of one or more media-cooled co-annular feed channels for carbon-containing fuels, oxidant, and moderator, which are embedded in a refractory lining of a POX reactor characterized by water cooling that is distant to the high temperature synthesis gas atmosphere inside the reactor. The object of the present invention is achieved by the solutions provided in the enclosed independent claims. Advantageous implementations of the present invention are further defined in the dependent claims.

The present invention provides a burner arrangement for producing a hydrogen and carbon oxides containing synthesis gas by non-catalytic or catalytic partial oxidation of fluid or fluidized carbon-containing fuels in the presence of an oxygen-containing oxidant and a moderator containing steam and/or carbon dioxide, comprising following parts or assemblies:
(a) means for separately feeding three fluid reaction media streams or two fluid and one fluidized reaction media streams into a burner, wherein the three reaction media streams are selected from the group comprising: a fluid or fluidized carbon-containing fuel stream, an oxygen-containing oxidant stream and a moderator stream,
(b) at least one burner, comprising:
   (b1) a first feed channel having a circular cross section, allowing feeding of the first reaction medium stream,
   (b2) a second feed channel which coaxially and concentrically surrounds the first feed channel, forming an annular gap between the outer wall of the first feed channel and the inner wall of the second feed channel, allowing feeding of the second reaction medium stream,
   (b3) optionally a third feed channel which coaxially and concentrically surrounds the second feed channel, forming an annular gap between the outer wall of the second feed channel and the inner wall of the third feed channel, allowing feeding of the third reaction medium stream,
   (b4) wherein the outer wall of the second feed channel or optionally the outer wall of the third feed channel forms the outer wall of the at least one burner,
   (b5) wherein the outer walls of all feed channels end in a first common plane which runs perpendicularly to the longitudinal axis of the burner and forms a burner mouth,
(c) wherein the outer wall of the at least one burner is mounted on and is fluid-tightly connected to a burner mounting plate in such a way that a part A of the length of the feed channels is passed through the burner mounting plate and a part B of the length of the feed channels is not passed through the burner mounting plate,
(d) a reaction chamber, wherein the reaction chamber comprises:
   - a pressure bearing wall with an outer wall surface and an inner wall surface,
   - a refractory lining attached to the inner wall surface of the pressure bearing wall,
   - an interior, being defined as the free space inside the reaction chamber, delimited by an inner surface of the refractory lining, and
   - an opening for insertion of the at least one burner mounted on the burner mounting plate into the reaction chamber,
(e) wherein the at least one burner mounted on the burner mounting plate is insertable into the reaction chamber via the opening in such a way that the part A of the length of the feed channels is located at least partially inside of the interior and/or inside of the refractory lining, and the part B of the length of the feed channels is located outside of the interior of the reaction chamber, and the burner mounting plate is detachably connectable in a fluid-tight manner, preferably using a flange connection, to the outer wall surface.

According to the invention, (f) both the portion of the outer wall of the at least one burner corresponding to part B of the length of the feed channels and the side of the at least one burner mounting plate facing away from the interior of the reaction chamber are designed to allow cooling by indirect heat exchange with a cooling fluid.

The burner arrangement according to the present invention is of advantage in that the burner arrangement minimizes the metal in contact with the high-temperature synthesis gas atmosphere, for example by co-annular feed channels with small wall thicknesses toward the high-temperature synthesis gas atmosphere. The co-annular feed channels are shielded from the high-temperature synthesis gas atmosphere by the refractory lining of the reactor or a dedicated refractory of the burner inserted into the reactor. Further, the burner arrangement enables cooling of the metal exposed to the high-temperature synthesis gas atmosphere by the process media/fluids such as carbon-containing fuels, oxidant, and moderator in such a manner that the heat transfer is best on the side of the lower temperature fluid or on the side of the fluid with the best heat transfer coefficient for cooling. For operation cases, where the media cooling fails, water cooling of the feed channels starts which is distant to the high-temperature synthesis gas atmosphere at a level of the reactor metal shell. The water cooling surrounds all injected media and prevents the break-through of high-temperature synthesis gas. This segregated cooling far from the high-temperature synthesis gas atmosphere ensures sufficient cooling of the burner arrangement during all operational cases. In addition, the high mechanical stress of the parts in contact with the high-temperature synthesis gas atmosphere is avoided. The high-temperature synthesis gas atmosphere cannot burn backward via the oxygen or feed channels so the burner arrangement is inherently safe. Accordingly, the operational life of the burner is improved.

According to a second aspect, the present invention provides a use of a burner arrangement for producing a hydrogen and carbon oxides containing synthesis gas by oxidation of fluid or fluidized carbon-containing fuels in the presence of an oxygen-containing oxidant and a moderator containing steam and/or carbon dioxide by catalytic partial oxidation (CPOX), non-catalytic partial oxidation (POX) or autothermal reforming (ATR).

Use of the burner arrangement in synthesis gas production is of advantage in that the burner arrangement minimizes the metal in contact with the high-temperature synthesis gas atmosphere and also avoids high mechanical stress of the parts in contact with the high-temperature synthesis gas atmosphere. The burner arrangement ensures sufficient cooling of the feed channels and the burner mounting plate during all operational cases.

Embodiments of the present invention eliminate the aforementioned drawbacks in existing known approaches by providing a burner arrangement comprising of one or more media cooled co-annular feed channels for carbon-containing fuels, oxidant and moderator. The advantage of the embodiments according to the present invention is that the embodiments enable segregated cooling far from the high-temperature gas atmosphere that always makes sure during all operational cases that the burner arrangement is sufficiently cooled and at the same time high mechanical stress of the parts in contact with the high-temperature synthesis gas atmosphere is avoided.

Additional aspects, advantages, features, and objects of the present invention are made apparent from the drawings and the detailed description of the illustrative embodiments construed in conjunction with the appended claims that follow. It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. To illustrate the present invention, exemplary constructions of the invention are shown in the drawings. However, the present invention is not limited to specific methods and instrumentalities disclosed herein. Moreover, those in the art will understand that the drawings are not to scale. Wherever possible, the same elements have been indicated by identical numbers. Embodiments of the present invention will now be described, by way of example only, with reference to the following diagrams wherein:
**FIG. 1A** is a schematic illustration of a burner arrangement for producing a hydrogen and carbon oxides containing synthesis gas by non-catalytic or catalytic partial oxidation of fluid or fluidized carbon-containing fuels in the presence of an oxygen-containing oxidant and a moderator containing steam and/or carbon dioxide according to an embodiment of the present invention;
**FIG. 1B** is a schematic illustration of the at least one burner of **FIG.1A** according to an embodiment of the present invention; and
**FIG. 2** is a schematic illustration of a cooling fluid channel of the burner arrangement of **FIG.1A** according to an embodiment of the present invention.

### DETAILED DESCRIPTION OF EMBODIMENTS

The following detailed description illustrates embodiments of the present invention and ways in which they can be implemented.

Although some modes of carrying out the present invention have been disclosed, those skilled in the art would recognize that other embodiments for carrying out or practicing the present invention are also possible.

As used herein, several terms are defined below:
Fluid or fluidized carbon-containing fuels are to be understood as meaning any gases, liquids, slurries, aerosols, pneumatically conveyed solid particles that contain carbon in elementary or chemically bound form, and that continuously flow under an applied shear stress, external force, or pressure difference. A non-exhaustive list of examples comprises hydrocarbonaceous gases like natural gas, hydrocarbonaceous liquids like naphtha, petroleum fractions, liquid refinery residues, solid carbonaceous particles like coal or coke powders or dusts.

An oxygen-containing oxidant is to be understood as any fluid containing oxygen, like pure oxygen at any purity level, air, or any other fluid that is capable of supplying oxygen to a carbon-containing reactant.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description steam is to be understood as being synonymous with water vapor unless the opposite is indicated in an individual case. By contrast, the term "water" refers to water in the liquid state of matter unless otherwise stated in an individual case.

Pressures, if any, are reported in absolute pressure units, bara for short, or in gauge pressure units, barg for short, unless otherwise stated in the particular individual context.

A fluid connection between two regions of the apparatus or plant according to the invention is to be understood as meaning any type of connection whatsoever which makes it possible for a fluid, for example, a gas stream, to flow from one to the other of the two regions, neglecting any interposed regions or components. In particular, a direct fluid connection is to be understood as meaning any type of connection whatsoever which makes it possible for a fluid, for example, a gas stream, to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

Optional or optionally means that the subsequently described event or circumstances may or may not occur. The description includes instances where the event or circumstance occurs and instances where it does not occur.

The present invention provides a burner arrangement for producing a hydrogen and carbon oxides containing synthesis gas by non-catalytic or catalytic partial oxidation of fluid or fluidized carbon-containing fuels in the presence of an oxygen-containing oxidant and a moderator containing steam and/or carbon dioxide, comprising following parts or assemblies: (a) means for separately feeding three fluid reaction media streams or two fluid and one fluidized reaction media streams into a burner, wherein the three reaction media streams are selected from the group comprising: a fluid or fluidized carbon-containing fuel stream, an oxygen-containing oxidant stream and a moderator stream, (b) at least one burner, comprising: (b1) a first feed channel having a circular cross section, allowing feeding of the first reaction medium stream, (b2) a second feed channel which coaxially and concentrically surrounds the first feed channel, forming an annular gap between the outer wall of the first feed channel and the inner wall of the second feed channel, allowing feeding of the second reaction medium stream, (b3) optionally a third feed channel which coaxially and concentrically surrounds the second feed channel, forming an annular gap between the outer wall of the second feed channel and the inner wall of the third feed channel, allowing feeding of the third reaction medium stream, (b4) wherein the outer wall of the second feed channel or optionally the outer wall of the third feed channel forms the outer wall of the at least one burner, (b5) wherein the outer walls of all feed channels end in a first common plane which runs perpendicularly to the longitudinal axis of the burner and forms a burner mouth, (c) wherein the outer wall of the at least one burner is mounted on and is fluid-tightly connected to a burner mounting plate in such a way that a part A of the length of the feed channels is passed through the burner mounting plate and a part B of the length of the feed channels is not passed through the burner mounting plate, (d) a reaction chamber, wherein the reaction chamber comprises: a pressure bearing wall with an outer wall surface and an inner wall surface, a refractory lining attached to the inner wall surface of the pressure bearing wall, an interior, being defined as the free space inside the reaction chamber, delimited by an inner surface of the refractory lining, and an opening for insertion of the at least one burner mounted on the burner mounting plate into the reaction chamber, (e) wherein the at least one burner mounted on the burner mounting plate is insertable into the reaction chamber via the opening in such a way that the part A of the length of the feed channels is located at least partially inside of the interior and/or inside of the refractory lining, and the part B of the length of the feed channels is located outside of the interior of the reaction chamber, and the burner mounting plate is detachably connectable in a fluid-tight manner, preferably using a flange connection, to the outer surface. According to the invention, (f) both the portion of the outer wall of the at least one burner corresponding to part B of the length of the feed channels and the side of the at least one burner mounting plate facing away from the interior of the reaction chamber are designed to allow cooling by indirect heat exchange with a cooling fluid.

The burner arrangement according to the present invention is of advantage in that the burner arrangement minimizes the metal in contact with the high-temperature synthesis gas atmosphere, for example by co-annular feed channels with small wall thicknesses toward the high-temperature synthesis gas atmosphere. The co-annular feed channels are shielded from the high-temperature synthesis gas atmosphere by the refractory lining of the reactor or a dedicated refractory of the burner inserted into the reactor. Further, the burner arrangement enables cooling of the metal exposed to the high-temperature synthesis gas atmosphere by the process media/fluids such as carbon-containing fuels, oxidant, and moderator in such a manner that the heat transfer is best on the side of the lower temperature fluid or on the side of the fluid with the best heat transfer coefficient for cooling. For operation cases, where the media cooling fails, water cooling of the feed channels starts which is distant to the high-temperature synthesis gas atmosphere at a level of the reactor metal shell. The water cooling surrounds all injected media and prevents the break-through of high-temperature synthesis gas. This segregated cooling far from the high-temperature synthesis gas atmosphere ensures sufficient cooling of the burner arrangement during all operational cases. In addition, the high mechanical stress of the parts in contact with the high-temperature synthesis gas atmosphere is avoided. The high-temperature synthesis gas atmosphere cannot burn backward via the oxygen or feed channels so the burner arrangement is inherently safe. Accordingly, the operational life of the burner is improved.

In an embodiment, the first reaction medium is the fluid or fluidized carbon-containing fuels. The second reaction medium is the oxygen-containing oxidant. The third reaction medium is the moderator containing steam and/or carbon dioxide. During shut-down of the reaction chamber, either high-pressure nitrogen or steam is injected into the reaction chamber via the fluid or fluidized carbon-containing fuel stream, the oxygen-containing oxidant stream, and the moderator stream feed channels for prevention of backflow and flushing of the reaction chamber inventory. Equi-distribution devices may be provided downstream of the fluid or fluidized carbon-containing fuel stream, the oxygen-containing oxidant stream, and/or the moderator stream feed channels to facilitate uniform distribution of the fluid or fluidized carbon-containing fuel stream, the oxygen-containing oxidant stream, and the moderator stream into the reaction chamber.

Optionally, both the outer wall of the at least one burner corresponding to part B of the length of the feed channels and the side of the at least one burner mounting plate facing away from the interior of the reaction chamber are designed to allow cooling by indirect heat exchange with a common cooling fluid stream. The common cooling fluid stream moves parallel to the at least one burner outer wall on a first part of its path and moves perpendicular to the at least one burner outer wall on a second part of its path. Cooling of the at least one burner outer wall is effected on the first portion of the path and wherein cooling of the burner mounting plate is effected on the second portion of the path.

The burner arrangement includes a first cooling pipe through which the common cooling fluid stream flows. The first cooling pipe is co-annular towards the feed channels in the case of a single co-annular feed channel set. In the case of multiple co-annular feed channel sets, the cooling water pipe surrounds all feed channel sets. The burner arrangement further comprises a second cooling pipe, which is co-annular to the first cooling pipe. The first and second cooling water pipes are aligned with the reactor flange or above the reactor flange and are in fluid connection. The flange for fluid-tight connecting of the at least one burner to the reactor chamber is either welded to the second cooling pipe or both welded to the second or third feed channel respectively and the second cooling pipe in such a manner that the reaction chamber flange diameter is minimized in size (diameter of second or third feed channel) and that the at least one burner including the feed channels flange and reactor flange is also cooled by the flow in the cooling pipes.

Optionally, the common cooling fluid stream moves in co-current or counter-current manner on the first portion of its path, relative to the flow of a reaction medium through at least one of the feed channels.

Optionally, at least two burners are mounted on and fluid-tightly connected to a common burner mounting plate which is detachably connectable to the outer wall surface, preferably at the top of the reaction chamber. Both the outer walls of all burners corresponding to part B of the length of the feed channels and the side of the common burner mounting plate facing away from the interior of the reaction chamber are designed to allow cooling by indirect heat exchange with a common cooling fluid stream. The common cooling fluid stream moves parallel to the burner outer wall of a first burner on a first part of its path and moves perpendicular to the burner outer wall of the first burner on a second part of its path and moves parallel to the burner outer wall of a second burner on a third part of its path. Cooling of the burner outer wall of the first burner is effected on the first part of the path, cooling of the burner mounting plate is effected on the second part of the path, and cooling of the burner outer wall of the second burner is effected on the third part of its path.

Optionally, the common cooling fluid stream moves in co-current manner, relative to the flow of a reaction medium through at least one of the feed channels of the first burner, on the first part of its path and in counter-current manner, relative to the flow of a reaction medium through at least one of the feed channels of the second burner, on the third part of its path, or the common cooling fluid stream moves in counter-current manner, relative to the flow of a reaction medium through at least one of the feed channels of the first burner, on the first part of its path and in co-current manner, relative to the flow of a reaction medium through at least one of the feed channels of the second burner, on the third part of its path.

Optionally, the burner arrangement comprises a first feed channel and a second feed channel and a first mixing device that allows mixing of a carbon-containing fuel stream and a moderator stream or mixing of an oxidant stream and a moderator stream, to yield a first mixed medium stream, the first mixed medium stream being fed to one of the first feed channel or second feed channel, and the third reaction medium stream being fed to the remaining feed channel. The carbon-containing fuel stream is a mixture of feedstock and steam. The oxidant stream is a mixture of oxygen and steam.

Optionally, the burner arrangement comprises a second mixing device that allows mixing of a particulate solid carbon stream, preferably comprising coal or coke, with a moderator stream, to yield a fluidized carbon-containing fuel stream, or mixing of a liquid carbon-containing stream, preferably comprising liquid hydrocarbons, with a moderator stream, to yield an atomized carbon-containing fuel stream. The second mixing device is arranged upstream of the at least one burner and is in fluid connection with one of the feed channels of the at least one burner. The atomization of liquid hydrocarbon feedstock, for example, preheated oil residue, is performed in a dedicated atomization device upstream of the at least one burner comprising the feed channels. The coal or coke is mixed with steam, upstream of the at least one burner comprising the feed channels.

Optionally, at least one of the feed channels of at least one burner is equipped with a swirl-inducing device. The first feed channel and/or second feed channel include casted metal parts with helical guiding vanes to create a swirling flow of the fluid or fluidized carbon-containing fuel stream and/or the oxygen-containing oxidant stream.

The swirling flow of the fluid or fluidized carbon-containing fuel stream and/or the oxygen-containing oxidant stream may be in counter-direction.

Optionally, the means for feeding the oxygen-containing oxidant stream is in fluid connection with the first feed channel, the means for feeding the fluid or fluidized carbon-containing fuel stream is in fluid connection with the second feed channel, and the means for feeding the moderator stream is in fluid connection with the third feed channel, or the means for feeding the oxygen-containing oxidant stream is in fluid connection with the first feed channel, the means for feeding the moderator stream is in fluid connection with the second feed channel, and the means for feeding the fluid or fluidized carbon-containing fuel stream is in fluid connection with the third feed channel. In an embodiment, the oxygen-containing oxidant stream is injected into the second feed channel, the fluid or fluidized carbon-containing fuel stream is injected into the first feed channel, and the moderator stream is optionally injected into the third feed channel. In another embodiment, the oxygen-containing oxidant stream is injected into the second feed channel, the moderator stream is injected into the first feed channel, and the fluid or fluidized carbon-containing fuel stream is injected into the third feed channel. The outlet of the third feed channel is aligned with the refractory lining of the reaction chamber. The second feed channel or the third feed channel, in the case of the optional third co-annulus, is shielded from the synthesis gas in the reaction chamber and surrounded by refractory, castable, or ceramic material.

Optionally, the gap between the outer wall of the at least one burner and the inner face of the opening is filled with a solid insulating material, preferably with ceramic paper. In this way, a gap between the outer wall of the at least one burner and the inner face of the opening is minimized, or even closed completely, and an intrusion of the high temperature corrosive atmosphere inside the reaction chamber is minimized, or even avoided completely.

Optionally, the cooling fluid stream is supplied using a flexible conduit, preferably a flexible hose, so that the cooling fluid stream can be supplied when the at least one burner is detached from the reaction chamber. This is advantageous since the at least one burner can still be cooled by the cooling fluid stream, thus decreasing the cooling time before re-attachment of the at least one burner to the reaction chamber, and also reducing burning hazards to operational personnel.

Optionally, means are comprised that allow feeding of liquid water as cooling medium at a pressure which is higher that the gas pressure in the reaction chamber.

Optionally, all of its parts being exposed to the synthesis gas at temperatures between 400 and 800 °C are covered with a layer of a corrosion protection material, the corrosion protection material being selected from the group comprising: ceramic material; alumina; aluminium, preferably as aluminium diffusion layer. In this way, the extent of corrosion of metal surface by synthesis gas ingredients like carbon monoxide or hydrogen, called Metal Dusting Corrosion (MDC), is greatly reduced or even avoided completely.

Optionally, the burner mounting plate or common burner mounting plate comprises an additional opening, the inner face of the additional opening being cooled by the cooling medium, the additional opening allowing insertion of a start-up burner during start-up of the burner arrangement and being closed with a plug made of a refractory material during normal operation of the burner arrangement. One of the multiple co-annular feed channels is replaced by a cooled access opening for the start-up burner, which is blocked by a cylindrical refractory brick during normal operation.

Optionally, the length A is chosen so that the burner mouth and the inner surface of the refractory lining lie in a common plane. This minimizes or even avoids completely that any parts of the at least one burner protrude into the interior of the reaction chamber. Thus, the extent of corrosion of metal surface by synthesis gas ingredients like carbon monoxide or hydrogen, called Metal Dusting Corrosion (MDC), is further reduced or even avoided completely.

According to a second aspect, the present invention provides a use of a burner arrangement for producing a hydrogen and carbon oxides containing synthesis gas by oxidation of fluid or fluidized carbon-containing fuels in the presence of an oxygen-containing oxidant and a moderator containing steam and/or carbon dioxide by catalytic partial oxidation (CPOX), non-catalytic partial oxidation (POX) or autothermal reforming (ATR).

Embodiments of the present invention substantially eliminate or at least partially address the aforementioned technical drawbacks in existing technologies by providing a burner arrangement comprising of one or more media cooled co-annular feed channels for carbon-containing fuels, oxidant and moderator which are embedded in a refractory lining of the POX reactor characterized by water cooling that is distant to the high-temperature synthesis gas atmosphere inside the POX reactor.

### DETAILED DESCRIPTION OF THE DRAWINGS

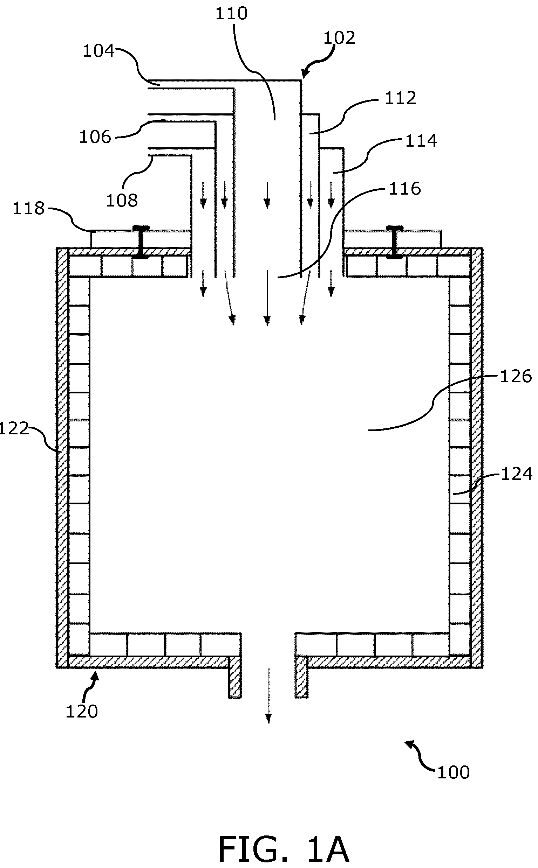

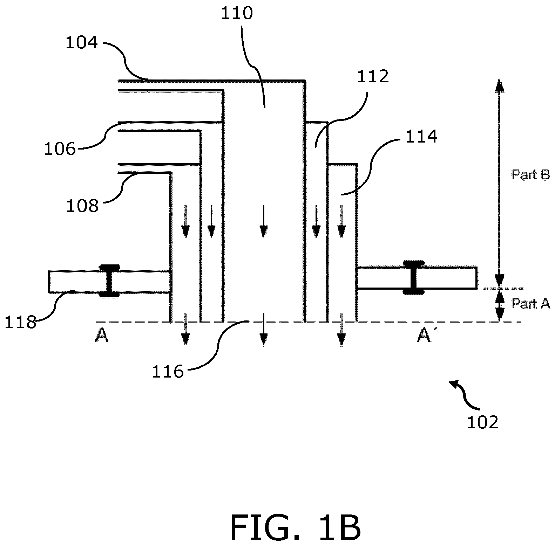

**FIG. 1A** is a schematic illustration of a burner arrangement **100** for producing a hydrogen and carbon oxides containing synthesis gas by non-catalytic partial oxidation of fluid or fluidized carbon-containing fuels in the presence of an oxygen-containing oxidant and a moderator containing steam and/or carbon dioxide according to an embodiment of the present disclosure. The burner arrangement **100** includes at least one burner **102,** a first feed pipe **104,** a second feed pipe **106,** a third feed pipe **108,** a reaction chamber **120.** The at least one burner **102** includes a first feed channel **110** having a circular cross section. The first feed channel **110** allows feeding of a first reaction medium stream. The at least one burner **102** includes a second feed channel **112** which coaxially and concentrically surrounds the first feed channel **110** and forms an annular gap between the outer wall of the first feed channel **110** and the inner wall of the second feed channel **112.** The annular gap between the outer wall of the first feed channel **110** and the inner wall of the second feed channel **112** allows feeding of a second reaction medium stream. The at least one burner **102** optionally includes a third feed channel **114** which coaxially and concentrically surrounds the second feed channel **112** forming an annular gap between the outer wall of the second feed channel **112** and the inner wall of the third feed channel **114.** The annular gap between the outer wall of the second feed channel **112** and the inner wall of the third feed channel **114** allows feeding of a third reaction medium stream. The outer wall of the second feed channel **112** or optionally the outer wall of the third feed channel **114** forms the outer wall of the at least one burner **102.** The outer walls of the first feed channel **110,** the second feed channel **112,** and the third feed channel **114** end in a first common plane (A-A') (see Fig. 1B for detail) which runs perpendicularly to the longitudinal axis of the at least one burner **102** and forms a burner mouth **116.** The outer wall of the at least one burner **102** is mounted on and is fluid-tightly connected to a burner mounting plate **118** in such a way that a part A of the length of the first feed channel **110,** the second feed channel **112,** and the third feed channel **114** is passed through the burner mounting plate **118** and a part B of the length of the first feed channel **110,** the second feed channel **112,** and the third feed channel **114** is not passed through the burner mounting plate **118** (see Fig. 1B for detail). The reaction chamber **120** includes a pressure bearing wall **122** with an outer wall surface and an inner wall surface. A refractory lining **124** is attached to the inner wall surface of the pressure bearing wall **122.** The reaction chamber **120** includes an interior **126,** being defined as the free space inside the reaction chamber **120** delimited by an inner surface of the refractory lining **124.** The reaction chamber **120** includes an opening for insertion of the at least one burner **102** mounted on the burner mounting plate **118** into the reaction chamber **120.** The at least one burner **102** is mounted on the burner mounting plate **118** and inserted into the reaction chamber **120** via the opening in such a way that the part A of the length of the first feed channel **110,** the second feed channel **112,** and the third feed channel **114** is located at least partially inside of the interior **126** and/or inside of the refractory lining **124,** and the part B of the length of the first feed channel **110,** the second feed channel **112,** and the third feed channel **114** is located outside of the interior **126** of the reaction chamber **120.** The burner mounting plate **118** is detachably connectable in a fluid-tight manner, preferably using a flange connection to the outer wall surface of the reaction chamber **120.** The burner mounting plate **118** may include screws with bolts and nuts for the flange connection. Both the portion of the outer wall of the at least one burner **102** corresponding to part B of the length of the first feed channel **110,** the second feed channel **112,** and the third feed channel **114** and the side of the at least one burner mounting plate **118** facing away from the interior **126** of the reaction chamber **120** are designed to allow cooling by indirect heat exchange with a cooling fluid.

**FIG. 1B** is a schematic illustration of the at least burner **102** of **FIG. 1A** according to an embodiment of the present disclosure. The at least one burner **102** includes the first feed channel **110** having circular cross section. The first feed channel **110** allows feeding of the first reaction medium stream. The at least one burner **102** includes the second feed channel **112** which coaxially and concentrically surrounds the first feed channel **110** and forms the annular gap between the outer wall of the first feed channel **110** and the inner wall of the second feed channel **112.** The annular gap between the outer wall of the first feed channel **110** and the inner wall of the second feed channel **112** allows feeding of the second reaction medium stream. The at least one burner **102** optionally includes the third feed channel **114** which coaxially and concentrically surrounds the second feed channel **112** forming an annular gap between the outer wall of the second feed channel **112** and the inner wall of the third feed channel **114.** The annular gap between the outer wall of the second feed channel **112** and the inner wall of the third feed channel **114** allows feeding of the third reaction medium stream. The outer wall of the second feed channel **112** or optionally the outer wall of the third feed channel **114** forms the outer wall of the at least one burner **102.** The outer walls of the first feed channel **110,** the second feed channel **112,** and the third feed channel **114** ends in a first common plane (A-A') which runs perpendicularly to the longitudinal axis of the at least one burner **102** and forms the burner mouth **116.** The outer wall of the at least one burner **102** is mounted on and is fluid-tightly connected to the burner mounting plate **118** in such a way that a part A of the length of the first feed channel **110,** the second feed channel **112,** and the third feed channel **114** is passed through the burner mounting plate **118** and a part B of the length of the first feed channel **110,** the second feed channel **112,** and the third feed channel **114** is not passed through the burner mounting plate **118.**

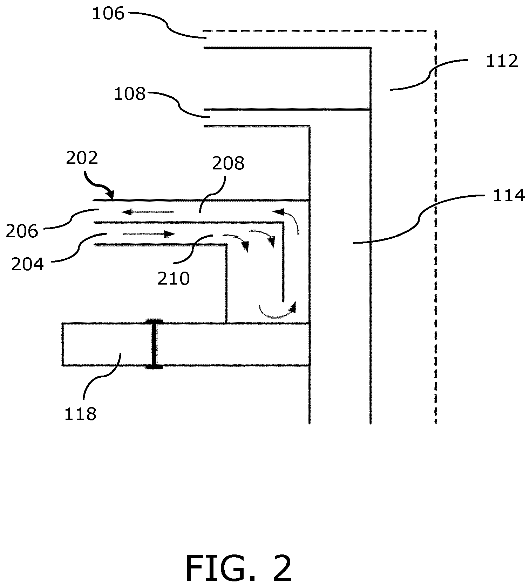

**FIG. 2** is a schematic illustration of details of a cooling fluid channel **202** of the burner arrangement **100** of **FIG. 1A** according to an embodiment of the present invention.

The cooling fluid channel **202** includes a cooling fluid inlet **204** and a cooling fluid outlet **206.** A common cooling fluid stream flows through the cooling fluid inlet **204** and is returned through the cooling fluid outlet **206.** The common cooling fluid stream flows from the cooling fluid inlet **204** in the injection direction through a second cooling pipe **210** into a first cooling pipe **208** wherein the second cooling pipe **210** is in fluid connection with the first cooling pipe **208,** and then flows against the injection direction through the first cooling pipe **208** to the cooling fluid outlet **206.** The outer wall of the at least one burner **102** corresponding to part B of the length of the first feed channel **110,** the second feed channel **112,** and the third feed channel **114** and the side of the at least one burner mounting plate **118** facing away from the interior **126** of the reaction chamber **120** are designed to allow cooling by indirect heat exchange with the common cooling fluid stream. The common cooling fluid stream moves parallel to the at least one burner **102** outer wall on a first part of its path and moves perpendicular to the at least one burner **102** outer wall on a second part of its path. All flows moving perpendicular to the at least one burner **102** outer wall shall be understood as being elements of the second part of the flow path, irrespective whether they flow into or out of cooling fluid channel **202.** The cooling of the at least one burner **102** outer wall is effected on the first portion of the path and cooling of the burner mounting plate **118** is effected on the second part of the path. The common cooling fluid stream may move in co-current or counter-current manner on the first portion of its path, relative to the flow of a reaction medium through the first feed channel **110,** the second feed channel **112,** and the third feed channel **114.** The embodiment shown in **Fig. 2** corresponds to a counter-current movement of the common cooling fluid stream relative to the flow of a reaction medium through the feed channels.

Modifications to embodiments of the present invention described in the foregoing are possible without departing from the scope of the present invention as defined by the accompanying claims. Expressions such as "including", "comprising", "incorporating", "have", "is" used to describe, and claim the present invention are intended to be construed in a non-exclusive manner, namely allowing for items, components or elements not explicitly described also to be present. Reference to the singular is also to be construed to relate to the plural.

### LIST OF REFERENCE NUMERALS

- 100 -: burner arrangement
- 102 -: at least one burner
- 104 -: first feed pipe
- 106 -: second feed pipe
- 108 -: third feed pipe
- 110 -: first feed channel
- 112 -: second feed channel
- 114 -: third feed channel
- 116 -: burner mouth
- 118 -: burner mounting plate
- 120 -: reaction chamber
- 122 -: pressure bearing wall
- 124 -: refractory lining
- 126 -: interior of the reaction chamber
- 202 -: cooling fluid channel
- 204 -: cooling fluid inlet
- 206 -: cooling fluid outlet
- 208 -: first cooling pipe
- 210 -: second cooling pipe

## Claims

1. Burner arrangement (100) for producing a hydrogen and carbon oxides containing synthesis gas by non-catalytic or catalytic partial oxidation of fluid or fluidized carbon-containing fuels in the presence of an oxygen-containing oxidant and a moderator containing steam and/or carbon dioxide, comprising following parts or assemblies:
(a) means (104, 106, 108) for separately feeding three fluid reaction media streams or two fluid and one fluidized reaction media streams into a burner (102), wherein the three reaction media streams are selected from the group comprising: a fluid or fluidized carbon-containing fuel stream, an oxygen-containing oxidant stream and a moderator stream,
(b) at least one burner (102), comprising:
(b1) a first feed channel (110) having a circular cross section, allowing feeding of the first reaction medium stream,
(b2) a second feed channel (112) which coaxially and concentrically surrounds the first feed channel (110), forming an annular gap between the outer wall of the first feed channel (110) and the inner wall of the second feed channel (112), allowing feeding of the second reaction medium stream,
(b3) optionally a third feed channel (114) which coaxially and concentrically surrounds the second feed channel (112), forming an annular gap between the outer wall of the second feed channel (112) and the inner wall of the third feed channel (114), allowing feeding of the third reaction medium stream,
(b4) wherein the outer wall of the second feed channel (112) or optionally the outer wall of the third feed channel (114) forms the outer wall of the at least one burner (102),
(b5) wherein the outer walls of all feed channels (110, 112, 114) end in a first common plane which runs perpendicularly to the longitudinal axis of the burner (102) and forms a burner mouth (116),
(c) wherein the outer wall of the at least one burner (102) is mounted on and is fluid-tightly connected to a burner mounting plate (118) in such a way that a part A of the length of the feed channels (110, 112, 114) is passed through the burner mounting plate (118) and a part B of the length of the feed channels (110, 112, 114) is not passed through the burner mounting plate (118),
(d) a reaction chamber (120), wherein the reaction chamber (120) comprises:
- a pressure bearing wall (122) with an outer wall surface and an inner wall surface,
- a refractory lining (124) attached to the inner wall surface of the pressure bearing wall (122),
- an interior (126), being defined as the free space inside the reaction chamber (120), delimited by an inner surface of the refractory lining (124), and
- an opening for insertion of the at least one burner (102) mounted on the burner mounting plate (118) into the reaction chamber (120),
(e) wherein the at least one burner (102) mounted on the burner mounting plate (118) is insertable into the reaction chamber (120) via the opening in such a way that the part A of the length of the feed channels (110, 112, 114) is located at least partially inside of the interior (126) and/or inside of the refractory lining (124), and the part B of the length of the feed channels (110, 112, 114) is located outside of the interior (126) of the reaction chamber (120), and the burner mounting plate (118) is detachably connectable in a fluid-tight manner, preferably using a flange connection, to the outer wall surface,
**characterized in that** (f) both the portion of the outer wall of the at least one burner (102) corresponding to part B of the length of the feed channels (110, 112, 114) and the side of the at least one burner mounting plate (118) facing away from the interior (126) of the reaction chamber (120) are designed to allow cooling by indirect heat exchange with a cooling fluid.

2. Burner arrangement (100) according to claim 1, **characterized in that** both the outer wall of the at least one burner (102) corresponding to part B of the length of the feed channels (110, 112, 114) and the side of the at least one burner mounting plate (118) facing away from the interior (126) of the reaction chamber (120) are designed to allow cooling by indirect heat exchange with a common cooling fluid stream,
wherein the common cooling fluid stream moves parallel to the at least one burner outer wall on a first part of its path and moves perpendicular to the at least one burner outer wall on a second part of its path,
wherein cooling of the at least one burner outer wall is effected on the first portion of the path and wherein cooling of the burner mounting plate (118) is effected on the second portion of the path.

3. Burner arrangement (100) according to claim 2, **characterized in that** the common cooling fluid stream moves in co-current or counter-current manner on the first portion of its path, relative to the flow of a reaction medium through at least one of the feed channels (110, 112, 114).

4. Burner arrangement (100) according to claim 1, **characterized in that** at least two burners are mounted on and fluid-tightly connected to a common burner mounting plate which is detachably connectable to the outer wall surface, preferably at the top of the reaction chamber (120), wherein both the outer walls of all burners corresponding to part B of the length of the feed channels (110, 112, 114) and the side of the common burner mounting plate facing away from the interior (126) of the reaction chamber (120) are designed to allow cooling by indirect heat exchange with a common cooling fluid stream,
wherein the common cooling fluid stream moves parallel to the burner outer wall of a first burner on a first part of its path and moves perpendicular to the burner outer wall of the first burner on a second part of its path and moves parallel to the burner outer wall of a second burner on a third part of its path,
wherein cooling of the burner outer wall of the first burner is effected on the first part of the path, cooling of the burner mounting plate (118) is effected on the second part of the path, and cooling of the burner outer wall of the second burner is effected on the third part of its path.

5. Burner arrangement (100) according to claim 4, **characterized in that**
the common cooling fluid stream moves in co-current manner, relative to the flow of a reaction medium through at least one of the feed channels (110, 112, 114) of the first burner, on the first part of its path and in counter-current manner, relative to the flow of a reaction medium through at least one of the feed channels (110, 112, 114) of the second burner, on the third part of its path, or
the common cooling fluid stream moves in counter-current manner, relative to the flow of a reaction medium through at least one of the feed channels (110, 112, 114) of the first burner, on the first part of its path and in co-current manner, relative to the flow of a reaction medium through at least one of the feed channels (110, 112, 114) of the second burner, on the third part of its path.

6. Burner arrangement (100) according to any one of the preceding claims, **characterized in that** it comprises the first feed channel (110) and the second feed channel (112) and a first mixing device that allows mixing of a carbon-containing fuel stream and a moderator stream or mixing of an oxidant stream and a moderator stream, to yield a first mixed medium stream, the first mixed medium stream being fed to one of the first feed channel (110) or second feed channel (112), and the third reaction medium stream being fed to the remaining feed channel.

7. Burner arrangement (100) according to any one of the preceding claims, **characterized in that** it comprises a second mixing device that allows
mixing of a particulate solid carbon stream, preferably comprising coal or coke, with a moderator stream, to yield a fluidized carbon-containing fuel stream, or
mixing of a liquid carbon-containing stream, preferably comprising liquid hydrocarbons, with a moderator stream, to yield an atomized carbon-containing fuel stream,
wherein the second mixing device is arranged upstream of the at least one burner (102) and is in fluid connection with one of the feed channels (110, 112, 114) of the at least one burner (102).

8. Burner arrangement (100) according to any of the preceding claims, **characterized in that** at least one of the feed channels (110, 112, 114) of at least one burner (102) is equipped with a swirl-inducing device.

9. Burner arrangement (100) according to any of the preceding claims, **characterized in that** the means (104, 106, 108) for feeding the oxygen-containing oxidant stream is in fluid connection with the first feed channel (110), the means (104, 106, 108) for feeding the fluid or fluidized carbon-containing fuel stream is in fluid connection with the second feed channel (112), and the means (104, 106, 108) for feeding the moderator stream is in fluid connection with the third feed channel (114), or
the means (104, 106, 108) for feeding the oxygen-containing oxidant stream is in fluid connection with the first feed channel (110), the means (104, 106, 108) for feeding the moderator stream is in fluid connection with the second feed channel (112), and the means (104, 106, 108) for feeding the fluid or fluidized carbon-containing fuel stream is in fluid connection with the third feed channel (114).

10. Burner arrangement (100) according to any of the preceding claims, **characterized in that** the gap between the outer wall of the at least one burner (102) and the inner face of the opening is filled with a solid insulating material, preferably with ceramic paper.

11. Burner arrangement (100) according to any of the preceding claims, **characterized in that** the cooling fluid stream is supplied using a flexible conduit, preferably a flexible hose, so that the cooling fluid stream can be supplied when the at least one burner (102) is detached from the reaction chamber (120).

12. Burner arrangement (100) according to any of the preceding claims, **characterized in that** means (104, 106, 108) are comprised that allow feeding of liquid water as cooling medium at a pressure which is higher that the gas pressure in the reaction chamber (120).

13. Burner arrangement (100) according to any of the preceding claims, **characterized in that** all of its parts being exposed to the synthesis gas at temperatures between 400 and 800 °C are covered with a layer of a corrosion protection material, the corrosion protection material being selected from the group comprising: ceramic material; alumina; aluminium, preferably as aluminium diffusion layer.

14. Burner arrangement (100) according to any of the preceding claims, **characterized in that** the burner mounting plate (118) or common burner mounting plate comprises an additional opening, the inner face of the additional opening being cooled by the cooling medium, the additional opening allowing insertion of a start-up burner during start-up of the burner arrangement (100) and being closed with a plug made of a refractory material during normal operation of the burner arrangement (100).

15. Burner arrangement (100) according to any of the preceding claims, **characterized in that** that the length A is chosen so that the burner mouth (116) and the inner surface of the refractory lining (124) lie in a common plane.

16. Use of a burner arrangement (100) of any one of claims 1 to 15 for producing a hydrogen and carbon oxides containing synthesis gas by oxidation of fluid or fluidized carbon-containing fuels in the presence of an oxygen-containing oxidant and a moderator containing steam and/or carbon dioxide by catalytic partial oxidation (CPOX), non-catalytic partial oxidation (POX) or autothermal reforming (ATR).

## Patentansprüche

1. Brenneranordnung (100) zum Herstellen eines Wasserstoff und Kohlenoxide enthaltenden Synthesegases durch nichtkatalytische oder katalytische Teiloxidation von fluiden oder fluidisierten kohlenstoffhaltigen Brennstoffen in Gegenwart eines sauerstoffhaltigen Oxidationsmittels und eines Moderator enthaltenden Dampfs und/oder Kohlenstoffdioxids, umfassend die folgenden Teile oder Baugruppen:
(a) Mittel (104, 106, 108) zum getrennten Zuführen von drei fluiden Reaktionsmediumströmen oder zwei fluiden und einem fluidisierten Reaktionsmediumstrom in einen Brenner (102), wobei die drei Reaktionsmediumströme ausgewählt sind aus der Gruppe umfassend: einen fluiden oder fluidisierten kohlenstoffhaltigen Brennstoffstrom, einen sauerstoffhaltigen Oxidationsmittelstrom und einen Moderatorstrom,
(b) mindestens einen Brenner (102), umfassend:
(b1) einen ersten Zufuhrkanal (110) mit einem kreisförmigen Querschnitt, der das Zuführen des ersten Reaktionsmediumstroms erlaubt,
(b2) einen zweiten Zufuhrkanal (112), der den ersten Zufuhrkanal (110) koaxial und konzentrisch umgibt, wodurch ein ringförmiger Zwischenraum zwischen der Außenwand des ersten Zufuhrkanals (110) und der Innenwand des zweiten Zufuhrkanals (112) gebildet wird, der das Zuführen des zweiten Reaktionsmediumstroms erlaubt,
(b3) gegebenenfalls einen dritten Zufuhrkanal (114), der den zweiten Zufuhrkanal (112) koaxial und konzentrisch umgibt, wodurch ein ringförmiger Zwischenraum zwischen der Außenwand des zweiten Zufuhrkanals (112) und der Innenwand des dritten Zufuhrkanals (114) gebildet wird, der das Zuführen des dritten Reaktionsmediumstroms erlaubt,
(b4) wobei die Außenwand des zweiten Zufuhrkanals (112) oder gegebenenfalls die Außenwand des dritten Zufuhrkanals (114) die Außenwand des mindestens einen Brenners (102) bildet,
(b5) wobei die Außenwände aller Zufuhrkanäle (110, 112, 114) in einer ersten gemeinsamen Ebene enden, die senkrecht zu der Längsachse des Brenners (102) verläuft und eine Brennermündung (116) bildet,
(c) wobei die Außenwand des mindestens einen Brenners (102) derart an einer Brennermontageplatte (118) montiert und fluiddicht damit verbunden ist, dass ein Teil A der Länge der Zufuhrkanäle (110, 112, 114) durch die Brennermontageplatte (118) hindurchläuft und ein Teil B der Länge der Zufuhrkanäle (110, 112, 114) nicht durch die Brennermontageplatte (118) hindurchläuft,
(d) eine Reaktionskammer (120), wobei die Reaktionskammer (120) Folgendes umfasst:
- eine drucktragende Wand (122) mit einer Außenwandfläche und einer Innenwandfläche,
- eine feuerfeste Auskleidung (124), die an die Innenwandfläche der drucktragenden Wand (122) angebracht ist,
- einen Innenraum (126), der als der freie Raum innerhalb der Reaktionskammer (120) definiert ist und durch eine Innenfläche der feuerfesten Auskleidung (124) begrenzt ist, und
- eine Öffnung zum Einsatz des mindestens einen Brenners (102), der an der Brennermontageplatte (118) montiert ist, in die Reaktionskammer (120),
(e) wobei der mindestens eine Brenner (102), der an der Brennermontageplatte (118) montiert ist, über die Öffnung derart in die Reaktionskammer (120) einsetzbar ist, dass der Teil A der Länge der Zufuhrkanäle (110, 112, 114) sich zumindest teilweise innerhalb des Innenraums (126) und/oder innerhalb der feuerfesten Auskleidung (124) befindet und der Teil B der Länge der Zufuhrkanäle (110, 112, 114) sich außerhalb des Innenraums (126) der Reaktionskammer (120) befindet und die Brennermontageplatte (118) mit der Außenwandfläche, vorzugsweise unter Verwendung einer Flanschverbindung, in fluiddichter Weise trennbar verbindbar ist,
**dadurch gekennzeichnet** (f), dass sowohl der Abschnitt der Außenwand des mindestens einen Brenners (102), die Teil B der Länge der Zufuhrkanäle (110, 112, 114) entspricht, als auch die Seite der mindestens einen Brennermontageplatte (118), die von dem Inneren (126) der Reaktionskammer (120) abgewandt ist, dazu ausgestaltet sind, ein Kühlen durch indirekten Wärmeaustausch mit einem Kühlfluid zu erlauben.

2. Brenneranordnung (100) nach Anspruch 1, **dadurch gekennzeichnet, dass** sowohl die Außenwand des mindestens einen Brenners (102), die Teil B der Länge der Zufuhrkanäle (110, 112, 114) entspricht, als auch die Seite der mindestens einen Brennermontageplatte (118), die von dem Inneren (126) der Reaktionskammer (120) abgewandt ist, dazu ausgestaltet sind, ein Kühlen durch indirekten Wärmeaustausch mit einem gemeinsamen Kühlfluidstrom zu erlauben,
wobei sich der gemeinsame Kühlfluidstrom auf einem ersten Teil seines Wegs parallel zu der mindestens einen Brenneraußenwand bewegt und sich auf einem zweiten Teil seines Wegs senkrecht zu der mindestens einen Brenneraußenwand bewegt,
wobei das Kühlen der mindestens einen Brenneraußenwand an dem ersten Abschnitt des Wegs ausgeführt wird und wobei das Kühlen der Brennermontageplatte (118) an dem zweiten Abschnitt des Wegs ausgeführt wird.

3. Brenneranordnung (100) nach Anspruch 2, **dadurch gekennzeichnet, dass** sich der gemeinsame Kühlfluidstrom auf dem ersten Abschnitt seines Wegs als Gleichstrom oder Gegenstrom in Bezug auf den Fluss eines Reaktionsmediums durch mindestens einen der Zufuhrkanäle (110, 112, 114) bewegt.

4. Brenneranordnung (100) nach Anspruch 1, **dadurch gekennzeichnet, dass** mindestens zwei Brenner an einer gemeinsamen Brennermontageplatte, die trennbar mit der Außenwandfläche, vorzugsweise an der Oberseite der Reaktionskammer (120), verbindbar ist, montiert und fluiddicht damit verbunden ist, wobei sowohl die Außenwände aller Brenner, die Teil B der Länge der Zufuhrkanäle (110, 112, 114) entsprechen, als auch die Seite der gemeinsamen Brennermontageplatte, die von dem Innenraum (126) der Reaktionskammer (120) abgewandt ist, dazu ausgestaltet sind, ein Kühlen durch indirekten Wärmeaustausch mit einem gemeinsamen Kühlfluidstrom zu erlauben,
wobei sich der gemeinsame Kühlfluidstrom auf einem ersten Teil seines Wegs parallel zu der Brenneraußenwand eines ersten Brenners bewegt und sich auf einem zweiten Teil seines Wegs senkrecht zu der Brenneraußenwand des ersten Brenners bewegt und sich auf einem dritten Teil seines Wegs parallel zu der Brenneraußenwand eines zweiten Brenners bewegt,
wobei das Kühlen der Brenneraußenwand des ersten Brenners auf dem ersten Teil des Wegs ausgeführt wird, das Kühlen der Brennermontageplatte (118) auf dem zweiten Teil des Wegs ausgeführt wird und das Kühlen der Brenneraußenwand des zweiten Brenners auf dem dritten Teil seines Wegs ausgeführt wird.

5. Brenneranordnung (100) nach Anspruch 4, **dadurch gekennzeichnet, dass**
sich der gemeinsame Kühlfluidstrom auf dem ersten Teil seines Wegs als Gleichstrom in Bezug auf den Fluss eines Reaktionsmediums durch mindestens einen der Zufuhrkanäle (110, 112, 114) des ersten Brenners und auf dem dritten Teil seines Wegs als Gegenstrom in Bezug auf den Fluss eines Reaktionsmediums durch mindestens einen der Zufuhrkanäle (110, 112, 114) des zweiten Brenners bewegt oder
sich der gemeinsame Kühlfluidstrom auf dem ersten Teil seines Wegs als Gegenstrom in Bezug auf den Fluss eines Reaktionsmediums durch mindestens einen der Zufuhrkanäle (110, 112, 114) des ersten Brenners und auf dem dritten Teil seines Wegs als Gleichstrom in Bezug auf den Fluss eines Reaktionsmediums durch mindestens einen der Zufuhrkanäle (110, 112, 114) des zweiten Brenners bewegt.

6. Brenneranordnung (100) nach einem der vorstehenden Ansprüche, **dadurch gekennzeichnet, dass** sie den ersten Zufuhrkanal (110) und den zweiten Zufuhrkanal (112) und eine erste Mischvorrichtung umfasst, die das Mischen eines kohlenstoffhaltigen Brennstoffstroms und eines Moderatorstroms oder das Mischen eines Oxidationsmittelstroms und eines Moderatorstroms erlaubt, um einen ersten gemischten Mediumstrom zu erhalten, wobei der erste gemischte Mediumstrom einem von dem ersten Zufuhrkanal (110) oder dem zweiten Zufuhrkanal (112) zugeführt wird und der dritte Reaktionsmediumstrom dem verbleibenden Zufuhrkanal zugeführt wird.

7. Brenneranordnung (100) nach einem der vorstehenden Ansprüche, **dadurch gekennzeichnet, dass** sie eine zweite Mischvorrichtung umfasst, die Folgendes erlaubt:
Mischen eines teilchenförmigen festen Kohlenstoffstroms, der vorzugsweise Kohle oder Koks umfasst, mit einem Moderatorstrom, um einen fluidisierten kohlenstoffhaltigen Brennstoffstrom zu erhalten, oder
Mischen eines flüssigen kohlenstoffhaltigen Stroms, der vorzugsweise flüssige Kohlenwasserstoffe umfasst, mit einem Moderatorstrom, um einen atomisierten kohlenstoffhaltigen Brennstoffstrom zu erhalten,
wobei die zweite Mischvorrichtung dem mindestens einen Brenner (102) vorgelagert angeordnet ist und sich in Fluidverbindung mit einem der Zufuhrkanäle (110, 112, 114) des mindestens einen Brenners (102) befindet.

8. Brenneranordnung (100) nach einem der vorstehenden Ansprüche, **dadurch gekennzeichnet, dass** mindestens einer der Zufuhrkanäle (110, 112, 114) von mindestens einem Brenner (102) mit einer wirbelinduzierenden Vorrichtung ausgestattet ist.

9. Brenneranordnung (100) nach einem der vorstehenden Ansprüche, **dadurch gekennzeichnet, dass** sich das Mittel (104, 106, 108) zum Zuführen des sauerstoffhaltigen Oxidationsmittelstroms in Fluidverbindung mit dem ersten Zufuhrkanal (110) befindet, sich das Mittel (104, 106, 108) zum Zuführen des fluiden oder fluidisierten kohlenstoffhaltigen Brennstoffstroms in Fluidverbindung mit dem zweiten Zufuhrkanal (112) befindet und sich das Mittel (104, 106, 108) zum Zuführen des Moderatorstroms in Fluidverbindung mit dem dritten Zufuhrkanal (114) befindet oder
sich das Mittel (104, 106, 108) zum Zuführen des sauerstoffhaltigen Oxidationsmittelstroms in Fluidverbindung mit dem ersten Zufuhrkanal (110) befindet, sich das Mittel (104, 106, 108) zum Zuführen des Moderatorstroms in Fluidverbindung mit dem zweiten Zufuhrkanal (112) befindet und sich das Mittel (104, 106, 108) zum Zuführen des fluiden oder fluidisierten kohlenstoffhaltigen Brennstoffstroms in Fluidverbindung mit dem dritten Zufuhrkanal (114) befindet.

10. Brenneranordnung (100) nach einem der vorstehenden Ansprüche, **dadurch gekennzeichnet, dass** der Zwischenraum zwischen der Außenwand des mindestens einen Brenners (102) und der Innenfläche der Öffnung mit einem festen Isolationsmaterial, vorzugsweise mit Keramikpapier, gefüllt ist.

11. Brenneranordnung (100) nach einem der vorstehenden Ansprüche, **dadurch gekennzeichnet, dass** der Kühlfluidstrom unter Verwendung einer flexiblen Leitung, vorzugsweise eines flexiblen Schlauchs, zugeführt wird, sodass der Kühlfluidstrom zugeführt werden kann, wenn der mindestens eine Brenner (102) von der Reaktionskammer (120) getrennt ist.

12. Brenneranordnung (100) nach einem der vorstehenden Ansprüche, **dadurch gekennzeichnet, dass** Mittel (104, 106, 108) umfasst sind, die ein Zuführen von flüssigem Wasser als Kühlmedium mit einem Druck erlauben, der höher als der Gasdruck in der Reaktionskammer (120) ist.

13. Brenneranordnung (100) nach einem der vorstehenden Ansprüche, **dadurch gekennzeichnet, dass** all ihre Teile, die dem Synthesegas bei Temperaturen zwischen 400 und 800 °C ausgesetzt werden, mit einer Schicht aus einem Korrosionsschutzmaterial beschichtet sind, wobei das Korrosionsschutzmaterial ausgewählt ist aus der Gruppe umfassend: Keramikmaterial; Aluminiumoxid; Aluminium, vorzugsweise als Aluminiumdiffusionsschicht.

14. Brenneranordnung (100) nach einem der vorstehenden Ansprüche, **dadurch gekennzeichnet, dass** die Brennermontageplatte (118) oder gemeinsame Brennermontageplatte eine zusätzliche Öffnung umfasst, wobei die Innenfläche der zusätzlichen Öffnung durch das Kühlmedium gekühlt wird, wobei die zusätzliche Öffnung einen Einsatz eines Anfahrbrenners während des Anfahrens der Brenneranordnung (100) erlaubt und mit einem Stopfen, der aus einem feuerfesten Material gefertigt ist, während des Normalbetriebs der Brenneranordnung (100) geschlossen ist.

15. Brenneranordnung (100) nach einem der vorstehenden Ansprüche, **dadurch gekennzeichnet, dass** die Länge A derart gewählt ist, dass die Brennermündung (116) und die Innenfläche der feuerfesten Auskleidung (124) in einer gemeinsamen Ebene liegen.

16. Verwendung einer Brenneranordnung (100) nach einem der Ansprüche 1 bis 15 zum Herstellen eines Wasserstoff und Kohlenoxide enthaltenden Synthesegases durch Oxidation von fluiden oder fluidisierten kohlenstoffhaltigen Brennstoffen in Gegenwart eines sauerstoffhaltigen Oxidationsmittels und eines Moderator enthaltenen Dampfs und/oder Kohlenstoffdioxids durch katalytische partielle Oxidation (CPOX), nichtkatalytische partielle Oxidation (POX) oder autotherme Reformierung (ATR).

## Revendications

1. Agencement de brûleur (100) pour la production d'un gaz de synthèse contenant de l'hydrogène et des oxydes de carbone par oxydation partielle non catalytique ou catalytique de combustibles fluides ou fluidisés contenant du carbone en présence d'un oxydant contenant de l'oxygène et d'un modérateur contenant de la vapeur et/ou du dioxyde de carbone, comprenant les parties ou ensembles suivants :
(a) des moyens (104, 106, 108) pour introduire séparément trois flux de milieux de réaction fluides ou deux flux de milieux de réaction fluides et un flux de milieu de réaction fluidisé dans un brûleur (102), les trois flux de milieux de réaction étant choisis dans le groupe comprenant : un flux de combustible contenant du carbone fluide ou fluidisé, un flux d'oxydant contenant de l'oxygène et un flux de modérateur,
(b) au moins un brûleur (102), comprenant :
(b1) un premier canal d'alimentation (110) de section circulaire, permettant l'alimentation du premier flux de milieu de réaction,
(b2) un deuxième canal d'alimentation (112) qui entoure de façon coaxiale et concentrique le premier canal d'alimentation (110), formant un espace annulaire entre la paroi externe du premier canal d'alimentation (110) et la paroi interne du deuxième canal d'alimentation (112), permettant l'alimentation du deuxième flux de milieu de réaction,
(b3) éventuellement un troisième canal d'alimentation (114) qui entoure de façon coaxiale et concentrique le deuxième canal d'alimentation (112), formant un espace annulaire entre la paroi externe du deuxième canal d'alimentation (112) et la paroi interne du troisième canal d'alimentation (114), permettant l'alimentation du troisième flux de milieu de réaction,
(b4) dans lequel la paroi externe du deuxième canal d'alimentation (112) ou éventuellement la paroi externe du troisième canal d'alimentation (114) forme la paroi externe du ou des brûleurs (102),
(b5) dans lequel les parois externes de tous les canaux d'alimentation (110, 112, 114) se terminant dans un premier plan commun qui s'étend perpendiculairement à l'axe longitudinal du brûleur (102) et formant une embouchure de brûleur (116),
(c) dans lequel la paroi externe du ou des brûleurs (102) est montée sur une plaque de montage de brûleur (118) et est reliée de manière étanche aux fluides à celle-ci, de telle sorte qu'une partie A de la longueur des canaux d'alimentation (110, 112, 114) traverse la plaque de montage de brûleur (118) et qu'une partie B de la longueur des canaux d'alimentation (110, 112, 114) ne traverse pas la plaque de montage de brûleur (118),
(d) une chambre de réaction (120), la chambre de réaction (120) comprenant :
- une paroi de support de pression (122) ayant une surface de paroi externe et une surface de paroi interne,
- un revêtement réfractaire (124) fixé à la surface de paroi interne de la paroi de support de pression (122),
- un intérieur (126), étant défini comme l'espace libre à l'intérieur de la chambre de réaction (120), délimité par une surface interne du revêtement réfractaire (124), et
- une ouverture pour l'insertion du ou des brûleurs (102) montée sur la plaque de montage de brûleur (118) dans la chambre de réaction (120),
(e) dans lequel le ou les brûleurs (102) montés sur la plaque de montage de brûleur (118) peuvent être insérés dans la chambre de réaction (120) via l'ouverture de telle manière que la partie A de la longueur des canaux d'alimentation (110, 112, 114) est située au moins partiellement à l'intérieur de l'intérieur (126) et/ou à l'intérieur du revêtement réfractaire (124), et la partie B de la longueur des canaux d'alimentation (110, 112, 114) est située à l'extérieur de l'intérieur (126) de la chambre de réaction (120), et la plaque de montage du brûleur (118) peut être reliée de manière amovible et étanche aux fluides, de préférence au moyen d'un raccord à bride, à la surface de paroi externe,
**caractérisé en ce que** (f) la partie de la paroi externe du ou des brûleurs (102) correspondant à la partie B de la longueur des canaux d'alimentation (110, 112, 114) et le côté de la ou des plaques de montage de brûleur (118) opposé à l'intérieur (126) de la chambre de réaction (120) sont tous deux conçus pour permettre un refroidissement par échange de chaleur indirect avec un fluide de refroidissement.

2. Agencement de brûleur (100) selon la revendication 1, **caractérisé en ce que** la paroi externe du ou des brûleurs (102) correspondant à la partie B de la longueur des canaux d'alimentation (110, 112, 114) et le côté de la ou des plaques de montage de brûleur (118) opposé à l'intérieur (126) de la chambre de réaction (120) sont conçus pour permettre un refroidissement par échange de chaleur indirect avec un flux de fluide de refroidissement commun,
dans lequel le flux de fluide de refroidissement commun se déplace parallèlement à la ou aux parois externe de brûleur sur une première partie de son trajet et se déplace perpendiculairement à la ou aux parois externes de brûleur sur une deuxième partie de son trajet,
dans lequel le refroidissement de la ou des parois externes de brûleur est effectué sur la première partie du trajet et dans lequel le refroidissement de la plaque de montage du brûleur (118) est effectué sur la deuxième partie du trajet.

3. Agencement de brûleur (100) selon la revendication 2, **caractérisé en ce que** le flux de fluide de refroidissement commun se déplace à courant parallèle ou à contre-courant sur la première partie de son trajet par rapport à l'écoulement d'un milieu de réaction à travers au moins l'un des canaux d'alimentation (110, 112, 114).

4. Agencement de brûleur (100) selon la revendication 1, **caractérisé en ce qu'** au moins deux brûleurs sont montés sur une plaque de montage de brûleur commune et reliés de manière étanche aux fluides à celle-ci, qui peut être reliée de façon amovible à la surface de paroi externe, de préférence sur la partie supérieure de la chambre de réaction (120), dans lequel les deux parois externes de tous les brûleurs correspondant à la partie B de la longueur des canaux d'alimentation (110, 112, 114) et le côté de la plaque de montage de brûleur commun opposé à l'intérieur (126) de la chambre de réaction (120) sont conçus pour permettre le refroidissement par échange de chaleur indirect avec un flux de fluide de refroidissement commun,
dans lequel le flux de fluide de refroidissement commun se déplace parallèlement à la paroi externe de brûleur d'un premier brûleur sur une première partie de son trajet et se déplace perpendiculairement à la paroi externe de brûleur du premier brûleur sur une deuxième partie de son trajet et se déplace parallèlement à la paroi externe de brûleur d'un deuxième brûleur sur une troisième partie de son trajet,
dans lequel le refroidissement de la paroi externe de brûleur du premier brûleur est effectuée sur la première partie du trajet, le refroidissement de la plaque de montage de brûleur (118) est effectué sur la deuxième partie du trajet, et le refroidissement de la paroi externe de brûleur du deuxième brûleur est effectué sur la troisième partie de son trajet.

5. Agencement de brûleur (100) selon la revendication 4, **caractérisé en ce que**
le flux de fluide de refroidissement commun se déplace parallèlement à l'écoulement d'un milieu de réaction à travers au moins un des canaux d'alimentation (110, 112, 114) du premier brûleur, sur la première partie de son trajet et à contre-courant par rapport à l'écoulement d'un milieu de réaction à travers au moins un des canaux d'alimentation (110, 112, 114) du deuxième brûleur, sur la troisième partie de son trajet, ou
le flux de fluide de refroidissement commun se déplace à contre-courant par rapport à l'écoulement d'un milieu de réaction à travers au moins un des canaux d'alimentation (110, 112, 114) du premier brûleur, sur la première partie de son trajet et parallèlement à l'écoulement d'un milieu de réaction à travers au moins un des canaux d'alimentation (110, 112, 114) du deuxième brûleur, sur la troisième partie de son trajet.

6. Agencement de brûleur (100) selon l'une quelconque des revendications précédentes, **caractérisé en ce qu'**il comprend le premier canal d'alimentation (110) et le deuxième canal d'alimentation (112) et un premier dispositif de mélange qui permet le mélange d'un flux de combustible contenant du carbone et d'un flux de modérateur ou le mélange d'un flux d'oxydant et d'un flux de modérateur, pour produire un premier flux de milieu mixte, le premier flux de milieu mixte étant introduit dans l'un parmi le premier canal d'alimentation (110) ou le deuxième canal d'alimentation (112), et le troisième flux de milieu de réaction étant introduit dans le canal d'alimentation restant.

7. Agencement de brûleur (100) selon l'une quelconque des revendications précédentes, **caractérisé en ce qu'** il comprend un deuxième dispositif de mélange qui permet le mélange d'un flux de carbone solide particulaire, comprenant de préférence du charbon ou du coke, avec un flux de modérateur, pour produire un flux de combustible contenant du carbone fluidisé, ou
le mélange d'un flux contenant du carbone liquide, comprenant de préférence des hydrocarbures liquides, avec un flux de modérateur, pour produire un flux de combustible contenant du carbone atomisé,
dans lequel le deuxième dispositif de mélange est disposé en amont du ou des brûleurs (102) et est en communication fluidique avec l'un des canaux d'alimentation (110, 112, 114) du brûleur (102).

8. Agencement de brûleur (100) selon l'une quelconque des revendications précédentes, **caractérisé en ce qu'** au moins un des canaux d'alimentation (110, 112, 114) d'au moins un brûleur (102) est équipé d'un dispositif générateur de tourbillon.

9. Agencement de brûleur (100) selon l'une quelconque des revendications précédentes, **caractérisé en ce que** les moyens (104, 106, 108) pour introduire le flux d'oxydant contenant de l'oxygène sont en communication fluidique avec le premier canal d'alimentation (110), les moyens (104, 106, 108) pour introduire le flux de combustible contenant du carbone fluide ou fluidisé sont en communication fluidique avec le deuxième canal d'alimentation (112) et les moyens (104, 106, 108) pour introduire le flux de modérateur sont en communication fluidique avec le troisième canal d'alimentation (114), ou
les moyens (104, 106, 108) pour introduire le flux d'oxydant contenant de l'oxygène sont en communication fluidique avec le premier canal d'alimentation (110), les moyens (104, 106, 108) pour introduire le flux de modérateur sont en communication fluidique avec le deuxième canal d'alimentation (112), et les moyens (104, 106, 108) pour introduire le flux de combustible contenant du carbone fluide ou fluidisé sont en communication fluidique avec le troisième canal d'alimentation (114).

10. Agencement de brûleur (100) selon l'une quelconque des revendications précédentes, **caractérisé en ce que** l'espace entre la paroi externe du ou des brûleurs (102) et la surface interne de l'ouverture est remplie d'un matériau isolant solide, de préférence de papier céramique.

11. Agencement de brûleur (100) selon l'une quelconque des revendications précédentes, **caractérisé en ce que** le flux de fluide de refroidissement est distribué au moyen d'une conduite flexible, de préférence un tuyau flexible, de sorte que le flux de fluide de refroidissement peut être distribué lorsque le ou les brûleurs (102) sont séparés de la chambre de réaction (120).

12. Agencement de brûleur (100) selon l'une quelconque des revendications précédentes, **caractérisé en ce que** des moyens (104, 106, 108) sont inclus qui permettent l'introduction d'eau liquide en tant que milieu de refroidissement à une pression qui est supérieure à la pression de gaz dans la chambre de réaction (120).

13. Agencement de brûleur (100) selon l'une quelconque des revendications précédentes, **caractérisé en ce que** toutes ses parties exposées au gaz de synthèse à des températures comprises entre 400 et 800 °C sont recouvertes d'une couche d'un matériau de protection contre la corrosion, le matériau de protection contre la corrosion étant choisi dans le groupe comprenant : un matériau céramique ; l'alumine ; l'aluminium, de préférence en tant que couche de diffusion d'aluminium.

14. Agencement de brûleur (100) selon l'une quelconque des revendications précédentes, **caractérisé en ce que** la plaque de montage de brûleur (118) ou la plaque de montage de brûleur commune comprend une ouverture supplémentaire, la face interne de l'ouverture supplémentaire étant refroidie par le fluide de refroidissement, l'ouverture supplémentaire permettant l'insertion d'un brûleur de démarrage lors du démarrage de l'agencement de brûleur (100) et étant fermée par un bouchon constitué de matériau réfractaire pendant le fonctionnement normal de l'agencement de brûleur (100).

15. Agencement de brûleur (100) selon l'une quelconque des revendications précédentes, **caractérisé en ce que** la longueur A est choisie de sorte que l'embouchure du brûleur (116) et la surface interne du revêtement réfractaire (124) sont situées dans un plan commun.

16. Utilisation d'un agencement de brûleur (100) selon l'une quelconque des revendications 1 à 15 pour la production d'un gaz de synthèse contenant de l'hydrogène et des oxydes de carbone par oxydation de combustibles contenant du carbone fluides ou fluidisés en présence d'un oxydant contenant de l'oxygène et d'un modérateur contenant de la vapeur et/ou du dioxyde de carbone par oxydation partielle catalytique (CPOX), oxydation partielle non catalytique (POX) ou reformage autothermique (ATR).
